(19)

Europäisches
Patentamt
European
Patent Office
Office européen
des brevets

(11) **EP 1 798 909 A1**

(12) **EUROPEAN PATENT APPLICATION**

(43) Date of publication:
**20.06.2007 Bulletin 2007/25**

(51) Int Cl.:
***H04L 12/56*** *(2006.01)*

(21) Application number: **05027740.9**

(22) Date of filing: **19.12.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(71) Applicant: **SIEMENS AKTIENGESELLSCHAFT
80333 München (DE)**

(72) Inventor: **Ribeiro, Alexandre
2615-063 Alverca (PT)**

(74) Representative: **Fischer, Michael
Siemens AG,
Postfach 22 16 34
80506 München (DE)**

(54) **Method for creating a path for data transmission in a network**

(57)     A method for creating a path for data transmission in a network is proposed, comprising:
- determinirig the data transmission delay in a round trip between a network element and further network elements adjacent to it,
- determining the network elements associated with the least round trip delay,
- providing constraints to network elements associated with greater round trip delays,
- creating a path that bypasses the network elements with constraints.

## FIG 4

**Description**

A method for creating a path for data transmission in a network, in particular within an TP (Internet Protocol) network, is presented.

Optimising data transmission in a communications network, for example by ensuring high speed data transmission, fast data download times, minimising transmission interruption is a priority in networking today, as the number of IP network users continues to increase and the availability of bandwidth is limited.

US6665273 B1 describes a method and apparatus for an MPLS system for traffic engineering. Actual traffic flow within a traffic engineering tunnel is determined and dynamically adjusts the bandwidth to reflect the actual traffic flow. Once the actual traffic flow is known, the bandwidth is updated in accordance with the actual traffic flow.

MPLS (Multi Protocol Label Switching) is an IETF (Internet Engineering Task Force) proposed data-carrying mechanism, that can integrate Layer 2 information into Layer 3 of the OSI Model within an autonomous system to simplify and improve data packet exchange. It provides a unified data-carrying service for both circuit-based clients and packet-switching clients which provide a datagram service model. It can be used to carry many different kinds of traffic, including transport of Ethernet frames and IP packets.

One objective to be achieved lies in providing a method that creates a path in a network so that fast and reliable data transmission is enabled.

A method for creating a path for data transmission in a network is proposed, comprising the following steps:

- determining the data transmission delay in a round trip between a network element and any network element adjacent to it,
- determining the network elements associated with the least round trip delay,
- applying constraints to network elements associated with greater round trip delays,
- creating a path through the network elements that bypasses the network elements with the applied constraints.

The method can be carried out for every environment comprising a core network element and immediately adjacent network elements, henceforth called a network nucleus. Thus, the measurement can be also carried out for network nuclei adjacent to each other.

It is preferred that the determination of the roundtrip delays is initiated by a NMS (Network Management System), whereby the NMS may specify the network environment in which the determination of said roundtrip delays is to be carried out. This may be done by specifying starting and ending network elements of the network environment of interest, also called ingress and egress network elements.

The measurement itself can be carried out by a network element comprising means for carrying out the measurement. The means comprise, for example, a program product suitable for measuring round trip delays between the network element and its adjacent neighbors.

The results of the measurements are preferably stored in a memory device, which may be part of the NMS. They may be stored in the form of a list of allowed and not allowed network elements. These indicate to the NMS which network elements should be provided with constraints.

After a list of constraints has been established, it may be sent to network elements within the scope of influence of the NMS. This may be done as often as updated delay information is presented to the NMS by network elements carrying out the relevant measurements.

The network elements may forward incoming data transmissions based on the constraints information received from the NMS and / or already in their possession. The application of constraints may be carried out by applying a label to a data packet that specifically addresses allowed network elements that bypass the network elements with constraints. Conversely, the application of constraints may be carried out by applying a label to a data transmission that specifically leaves out the addresses of network elements with constraints.

Alternatively, when creating the path, the NMS may send a command to an ingress network element, stating the egress network element and the path constraints, for example by indicating a list of IP addresses of network elements to include and a list to exclude. The network element can then take this information and create the required path. Where the network is an MPLS network, the network elements, in particular routers, should support MPLS.

The path created and transmitting the data preferably leads from one switch to another, whereby the switch may be a router, in particular a Labeled Edge Router. The path may pass through a series switches or router, in particular Label Switch Routers. The network elements chosen to be the starting and end points of the path may be chosen by the NMS or by an operator. It is to be noted that between every two routers, there may be a plurality of switches. For an MPLS network, it is preferred that the routers all support MPLS.

The determination of the round trip time can be performed a number of times, preferably periodically. In this case, a path comprising network elements associated with the average least round trip time is created. One aspect of this multiple measurement covers determining the difference between the round trip between a core network element and a second network element adjacent to it and the value of the round trip between the said core network element and the second network element as measured another time, whereby the absolute value of this difference is taken and divided by the number of times the round trips were measured.

The method can be further characterised in that the determination of the round trip time between two adjacent network elements is performed in consideration of the jitter they may be associated with. Thus, constraints are applied to network elements associated with jitter above an acceptable value. In this context, jitter is considered to be the variation of the roundtrip delays over multiple measurements. Jitter can, however, also be interpreted as being an abrupt and unwanted variation of one or more signal characteristics, such as the interval between successive pulses, the amplitude of successive cycles, or the frequency or phase of successive cycles. It can also be understood as being a variation or statistical dispersion in the delay of transmitted data packets due, for example, to routers internal queues behavior in certain circumstances, and / or routing changes.

In addition, along with determining roundtrip delays, with or without having considered jitter and with or without having carried out multiple measurements, the available bandwidth in associated with the network element may also be considered when selecting and creating the path, such that available bandwidth below a certain amount may negate the selection of a network element in a path even if the round trip time or jitter in this network element is allowable.

The data transmission preferably comprises the transmission of a data packet suitable for transmission in an IP network.

The method is preferably applied in an MPLS network. In this case, determining the time a data packet takes for a round trip, the delay or jitter of the data packet transmission in the round trip between a network element and further network elements can be performed by means of an MPLS OAM test. This test can be carried out by a network element supporting MPLS. In the case where the data transmission is performed in an MPLS network, a transmitted data packet is characterised by MPLS labeling.

It is preferred that the creation of the path is carried out by an MPLS control plane or another installed program product in the respective network element.

The described embodiments are further elaborated upon by means of the following drawings and examples, whereby:

Drawing 1    shows a network tunnel leading from an ingress router to an egress router,

Drawing 2    shows a network with network elements having constraints along with a path leading from an ingress router to an egress router,

Drawing 3    shows a network comprising network elements without constraints along with a path leading from an ingress router to an egress router,

Drawing 4    shows a network comprising network elements with constraints along with an alternative path leading from an ingress router to an egress router.

The exit points of networks described can be considered to be LERs (Label Edge Routers). More generally, these can be devices acting as ingress or egress routers and may also be referred to as PE (Provider Edge) routers. Routers that are performing routing based only on Label Switching are called LSRs (Label Switch Routers).

It is to be noted that the routers need not necessarily connect one network or LAN or VLAN to another, independent of whether they are LSRs or LERs in an example, so that henceforth the routers are replaceable by switches that perform forwarding tasks for data packets from one network element to another. A router is thus considered to be a particular type of switch.

When an unlabeled data packet is transmitted to and enters an ingress router, for example if it needs to be passed onto an an MPLS tunnel in the case that the transmission occurs within an MPLS network, the ingress router first determines the forwarding equivalence class that the packet should be in, and then inserts one (or more) labels in the packet's newly created MPLS header. The packet is then passed on to a next router for this tunnel. Thus, in more general terms, when packets enter an MPLS-based network, LERs can give them an identifier label. These labels not only contain information based on the routing table entry (i.e., destination, bandwidth and other metrics), but also refer to the IP header field (source IP address), Layer 4 socket number information, and differentiated service. Once this classification is complete and mapped, different packets are assigned to corresponding LSPs (Labeled Switch Paths), where LSRs place outgoing labels on the packets. With these LSPs, an NMS or a network operator can divert and route traffic based on data-stream type.

When a labeled packet is received by a router, such as an ingress router, the topmost label of the packet is examined. Based on the contents of the label a swap, push or pop operation can be performed on the packet's label stack.

The router is preferably provided with a lookup-table that informs router which kind of operation should be performed on the data packet based on the topmost label of the incoming data packet.

In a swap operation, the router swaps the label of the data packet with a new label, and the data packet is forwarded along the path associated with the new label.

In a push operation, the router adds or "pushes" a new label on top of the existing label of the incoming data packet, effectively "encapsulating" the packet in another layer of labeling. This would allow the hierarchical routing of data packets, wherein routing of the packet is performed according to the instructions of the labels in the order they are in.

In a pop operation the label is removed from the packet, which may reveal an inner label below in a decapsulation process. If the popped label was the last on the label stack, the packet "leaves" the network or tunnel, in the case that one has been established.

A method for creating and using a path within a network is proposed, wherein network elements, such as the routers described above, are provided with constraints. Not only may the routers be provided with constraints, however. A link, as a further example of a network element, may also be provided with a constraint. The same applies to a port of a switch or router. The path is preferably a traffic engineered tunnel, henceforth called TE tunnel, and is contained preferably in an MPLS network. An MPLS network is preferred, as it provides a system for interpretation of data packet labels that enables particularly efficient forwarding and transmission of said data packets. Other networks, in particular IP network, may however also be used, in particular if they allow the addition and removal of data packet labels.

The said constraints might include network elements or ports of these network elements through which the traffic should or should not pass, whereby the constraints can be dependent for example on bandwidth requirements or bandwidth availability. Thus, the TE tunnels with constraints advantageously allow the NMS or an operator of the relevant network to direct the traffic in order not to follow an existing established path.

It is further proposed to make a constraint dependent on delay and jitter within a network, whereby delay and jitter are parameters which were found could be wholly independent of available bandwidth. Instead, since it was found that many more parameters other than the available bandwidth might affect delay and jitter, such as for example switching mode, or queuing modes, the creation of tunnel paths that respect given delay parameters can be used to manage a network or least parts of a network efficiently.

Drawing 1 shows a tunnel path TE being established in a network domain D, here an MPLS domain, between the two LERs LER1 and LER2. The horizontal, thick arrow indicates that a path between LER1 and LER2 is desired. This means that a NMS may have indicated that these two routers should be the starting and ending point of the desired tunnel path. A data packet P coming from a customer, client or end-user CE is marked with a label at LER1, so that the data packet after transmission from the LER1 into the network is shown as a data packet PL with labels indicated. From there on, when the packet passes through an LSR, it is routed according to its label, instead of being routed by its IP address. When the packet PL reaches the end LER2 of the network domain D, the label of the data packet is removed in a pop operation and the packet can be delivered to a different network, which may be a non-MPLS network, by means of the IP address left in the data packet.

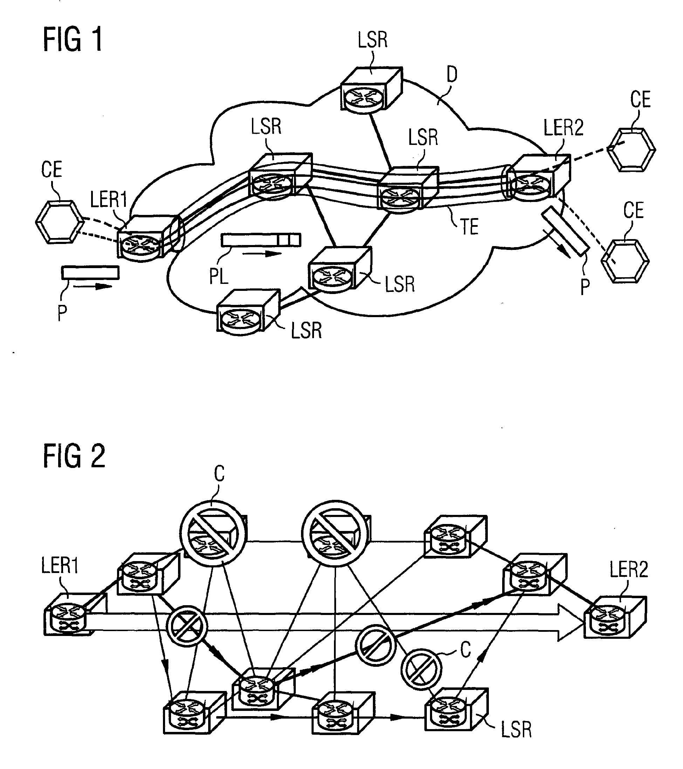

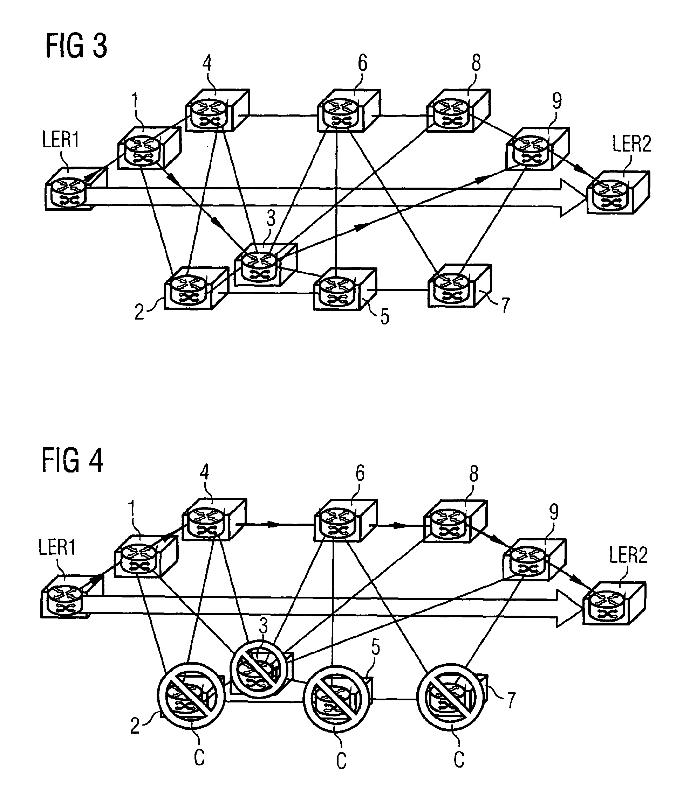

When creating the tunnel TE through the network, if no constraints are given, the tunnel will follow the shortest path of the underlying IGP (Interior Gateway Protocol), which may be OSPF (Open Shortest Path First), which is a link-state, hierarchical IGP protocol, or IS-IS (Intermediate System to Intermediate System). If the NMS is set not to let the tunnel follow the shortest path defined by the IGP, constraints may be placed. The constraints would block the use of certain network elements such as the LSRs shown in the drawing, thus triggering the use of an alternative route. These constraints may be dependent on available bandwidth, or alternatively, they may be made to be dependent on delay and jitter in the network. The constraints, however, may also be used to explicitly allow the use of certain network elements.

Drawing 2 shows the shortest path discovered by the IGP and is indicated with double arrows. Here the NMS or an operator has placed constraints C on two of the links of the shortest path. After the constraints have been placed, the shortest path between LER1 and LER2 will be the path indicated with single arrows.

Being able to define tunnels based on delay and jitter constraints represents a significant added value to any network, NMS or operator, since delay and jitter can be, for example, attributes of an SLA (Service of Level Agreement).

To simplify the gathering of jitter and delay information, it is proposed to make on the fly measurements of the roundtrip delay between any two network elements. Since these measurements can be automated by the placement of tasks in an EMS, for example, repeating measurements every 15 seconds), an advantage is gained in that it is simple to get an updated measurement of the delay between any two network elements and report these to the NMS.

A method is proposed to create a path between two network elements in a network based on jitter and delay, whereby:

- An environment within the scope of an NMS is selected by the NMS. This can be done for example by specifying the starting and ending points of a desired path.

- Tests, for example MPLS OAM tests (in the case where the network is an MPLS network), are carried out to measure the roundtrip delay between a network element and all its adjacent network elements (only network elements directly connected to it) in the specified environment or between the starting and ending points. The tests can be initiated upon by the NMS.

- With the tests, the roundtrip delay is measured periodically every x seconds, x being a value defined by the NMS or operator of the network. Since these tests are only done between directly adjacent network elements, the number of running tests will be equal to the number of network elements, so that if a test is already running from A to B, it will not be necessary to create a test from B to A. The number of measurements made is considered to be a value *y*, which can be defined by the NMS or operator and is greater than or equal to 2, i.e., the NMS stores at least the last two results of the roundtrip delay tests for each link of the network.

- The results of the roundtrip delay tests between each pair of adjacent connected network elements are stored on a memory device, comprised for example by the NMS or by the network element. The results of the tests can be sent from all core network elements, for example ingress routers, within the network environment of interest selected by the NMS.

- The jitter for each link is calculated. The calculation can be performed by the NMS or by a network element with means to carry out the calculation. Since a test is run between each pair of adjacent network elements, it can be considered a test per link. The calculation may be based on the following formula:

$$\frac{\sum_{n=1}^{y-1} \left| Roundtripdelay(n) - Roundtripdelay(n+1) \right|}{y}$$

whereby:

- the sum $\Sigma$ of the absolute value of [(Roundtripdelay(n) -
- Roundtripdelay(n+1))] is determined,
- n is a value, such as an integer, representing a network element,
- Roundtripdelay (n) is the round trip delay between a first network element and a second network element,
- Roundtripdelay(n+1) is the subsequent roundtrip delay, since "n" varies from 1 to y-1,
- the sum $\Sigma$ is calculated from n = 1 to *y* - 1,
- y is the number of stored roundtrip delay tests,
- the sum $\Sigma$ is divided by *y*.

- A path is determined that complies with the delay and jitter values supplied by the NMS or operator or one that complies with acceptable maximum jitter / delay. Constraints are applied to those network elements with jitter above an accepted value.

- A network element transmits, switches or forwards data according to the constraint information in its possession and/or received from the NMS, such that the data only passes through network elements without having been designated with a constraint.

Referring to a network as shown in drawing 3, the following table represents the delay measured between any network element 1 to 9 and all its directly adjacent network elements 1 to 9. The drawing shows two LERs LER1 and LER2, each at an end of a network domain containing a plurality of network elements 1 to 9 each connected to adjacent network elements. For simplicity, the table shows only two delay / jitter measurements (y = 2), however more than two measurements can be performed to improve accuracy:

|  | 1 | 2 | 3 | 4 | 5 | 6 | 7 | 8 | 9 |
|---|---|---|---|---|---|---|---|---|---|
| 1 (1st) | NA | 10 | 5 | 2 | NA | NA | NA | NA | NA |
| 1 (2nd) | NA | 11 | 17 | 2 | NA | NA | NA | NA | NA |
| 2 (1st) | 10 | NA | 3 | 2 | 17 | NA | NA | NA | NA |
| 2 (2nd) | 11 | NA | 3 | 2 | 18 | NA | NA | NA | NA |

(continued)

|  | 1 | 2 | 3 | 4 | 5 | 6 | 7 | 8 | 9 |
|---|---|---|---|---|---|---|---|---|---|
| 3 (1st) | 5 | 3 | NA | 67 | 23 | 10 | NA | 21 | 13 |
| 3 (2nd) | 17 | 3 | NA | 13 | 23 | 12 | NA | 21 | 13 |
| 4 (1st) | 2 | 2 | 67 | NA | NA | 3 | NA | NA | NA |
| 4 (2nd) | 2 | 2 | 13 | NA | NA | 3 | NA | NA | NA |
| 5 (1st) | NA | 17 | 23 | NA | NA | 3 | 5 | NA | NA |
| 5 (2nd) | NA | 18 | 23 | NA | NA | 3 | 5 | NA | NA |
| 6 (1st) | NA | NA | 10 | 3 | 3 | NA | 11 | 2 | NA |
| 6 (2nd) | NA | NA | 12 | 3 | 3 | NA | 11 | 2 | NA |
| 7 (1st) | NA | NA | NA | NA | 5 | 11 | NA | NA | 8 |
| 7 (2nd) | NA | NA | NA | NA | 5 | 11 | NA | NA | 8 |
| 8 (1st) | NA | NA | 21 | NA | NA | 2 | NA | NA | 5 |
| 8 (2nd) | NA | NA | 21 | NA | NA | 2 | NA | NA | 5 |
| 9 (1st) | NA | NA | 13 | NA | NA | NA | 8 | 5 | NA |
| 9 (2nd) | NA | NA | 13 | NA | NA | NA | 8 | 5 | NA |

If no constraints are present in the network, as shown in drawing 3, the selected path indicated by single arrows leads through LER1 (Ingress) -> 1 -> 3 -> 9 -> LER2 (Egress). According to the data from the table above, if the NMS instead decides to place a very restrictive jitter constraint of 0, that is, virtually no variation in the delay is accepted in a part of a path connecting LER1 and LER2, the selected path would be LER1 (Ingress) -> 1 -> 4 -> 6 -> 8 -> 9 -> LER2 (Egress), as the links between the network elements were shown to have least delay according to the table.

According to the previously stated formula, the jitter for each link would be calculated as follows:

Jitter 1 to 4: absolute value of (2-2) = 0
Jitter 4 to 6: absolute value of (3-3) = 0
Jitter 6 to 8: absolute value of (2-2) = 0
Jitter 8 to 9: absolute value of (5-5) = 0

Since in every other path there is at least a link whose jitter is different from 0, the path leading through network elements 1 -> 4 -> 6 -> 8 -> 9 in that order would be the path selected by the NMS.

Drawing 4 shows how network elements and link restrictions created by the direct placement of constraints at the network elements 2, 3, 5 and 7 lead to the selection of a tunnel whose path would be equal to the path calculated where the jitter is zero. By placing network element constraints, when creating the path according to the calculated jitter, a tunnel that respects the jitter constraints defined in the NMS or that are set by the operator can be created, even if the network consists of network elements that themselves are not configured to or do not support delay and jitter constraints on their own.

The method of using jitter and delay constraints to select a path through a network has the advantage that the NMS or the operator need not be provided with the full knowledge of the network or manual measurements of the delay and jitter over a tunnel's path. Furthermore, it is possible to easily translate SLA jitter and delay requirements to actual tunnel creation attributes. Network manageability and cost reduction are also an advantageous consequence of the method. Using this method, new premium services may offered using existing network elements, even though these and other equipment underlying the network do not support actual delay and jitter constraints.

List of Abbreviations

LER1    ingress Router
LER2    egress Router

LSR     Label Switching Router / Switch
D     network domain
CE     customer or client
P     data packet
PL     data packet with label
C     constraint
TE     tunnel
1 to 9     routers or switches

**Claims**

1. Method for creating a path for data transmission in a network, comprising:

   - determining the data transmission delay in a round trip between a network element and further network elements adjacent to it,
   - determining the network elements associated with the least round trip delay,
   - providing constraints to network elements associated with greater round trip delays,
   - creating a path that bypasses the network elements with constraints.

2. Method according to claim 1, whereby determining the round trip delay is carried out by a network element.

3. Method according to one of the preceding claims, whereby the data transmission comprises the transmission of a data packet suitable for transmission in an IP network.

4. Method according to one of the preceding claims, whereby the results of the determination of the round trip delays are preferably stored in a memory device.

5. Method according to one of the preceding claims, whereby the determination of the round trip delay is performed a number of times.

6. Method according to claim 6, whereby the round trip delay is determined periodically.

7. Method according to one of the claims 5 or 6, whereby the difference between the round trip delay between a first network element and a second network element is determined, whereby the absolute value of this difference is taken and divided by the number of times the round trip delays were measured.

8. Method according to one of the claims 5 to 7, whereby the jitter in the round trip delays is determined and constraints are applied to network elements with jitter above a certain value.

9. Method according to one of the claims 5 to 8, whereby the path passing through network elements with the least average round trip delay is created.

10. Method according to one of the preceding claims, whereby the path is created in an MPLS network.

11. Method according to claim 10, whereby determining the round trip delay is be performed by means of an MPLS OAM test mounted on a network element.

12. Method according to one of the claims 10 or 11, whereby the data transmission comprises a data packet **characterised by** MPLS labeling.

13. Method according to one of the preceding claims, whereby the network elements comprise switches.

14. Method according to one of the preceding claims, whereby the network elements comprise links.

15. Method according to one of the preceding claims, whereby the network elements comprise routers.

16. Method according to claim 15, whereby the routers comprise Label Edge Routers.

**17.** Method according to claim 16, whereby the Label Edge Routers are the start and end points of the created path.

**18.** Method according to one of the claims 15 to 17, whereby the routers comprise Label Switch Routers.

FIG 1

FIG 2

## FIG 3

## FIG 4

European Patent
Office

**EUROPEAN SEARCH REPORT**

Application Number

EP 05 02 7740

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 014 627 A (LUCENT TECHNOLOGIES INC) 28 June 2000 (2000-06-28) * paragraph [0002] - paragraph [0040] * ----- | 1,3-19 | H04L12/56 |
| X | US 2002/018449 A1 (RICCIULLI LIVIO) 14 February 2002 (2002-02-14) * paragraph [0003] - paragraph [0062] * ----- | 1,3-19 | |
| A | US 2002/169887 A1 (MELAMPY PATRICK J ET AL) 14 November 2002 (2002-11-14) * paragraph [0053] - paragraph [0314] * ----- | 1,3-19 | |
| A | US 6 272 539 B1 (CUOMO GENNARO A ET AL) 7 August 2001 (2001-08-07) * column 2, line 59 - column 4, line 33 * ----- | 1,3-19 | |
| A | EP 1 515 495 A (NIPPON TELEGRAPH AND TELEPHONE CORPORATION) 16 March 2005 (2005-03-16) * the whole document * ----- | 1,3-19 | |

| | TECHNICAL FIELDS SEARCHED (IPC) |
|---|---|
| | H04L |

The present search report has been drawn up for all claims

| Place of search | Date of completion of the search | Examiner |
|---|---|---|
| The Hague | 4 April 2006 | Ciurel, C |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 05 02 7740

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2006

| Patent document cited in search report | | Publication date | Patent family member(s) | | Publication date |
|---|---|---|---|---|---|
| EP 1014627 | A | 28-06-2000 | CA | 2290026 A1 | 22-06-2000 |
| | | | JP | 3524456 B2 | 10-05-2004 |
| | | | JP | 2000196650 A | 14-07-2000 |
| | | | US | 6321271 B1 | 20-11-2001 |
| US 2002018449 | A1 | 14-02-2002 | NONE | | |
| US 2002169887 | A1 | 14-11-2002 | EP | 1342351 A1 | 10-09-2003 |
| | | | JP | 2005502219 T | 20-01-2005 |
| | | | WO | 02058349 A1 | 25-07-2002 |
| US 6272539 | B1 | 07-08-2001 | NONE | | |
| EP 1515495 | A | 16-03-2005 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6665273 B1